# EUROPEAN PATENT APPLICATION

(11) **EP 4 707 986 A1**
(43) Date of publication of application: **11.03.2026**
(21) Application number: 24199534.9
(22) Date of filing: 10.09.2024
(51) Int. Cl.: G06F 1/04, G06F 1/10, H04B 10/116

(54) **SYSTEM AND METHOD FOR HIGH-PRECISION IMAGE TIMESTAMPING AND GEOREFERENCING THROUGH BINARY ENCODING WITH INDIVIDUALLY ADDRESSABLE LEDS**

(71) Applicant: ODYTICS Sàrl, 1694 Villarsiviriaux (CH)
(72) Inventor: MICHAUD, Raphaël, 1694 Villarsiviriaux (CH)
(74) Representative: Weihs, Bruno Konrad

(57) **Abstract**

A system for generating time encodings. The system comprises a timestamp generating circuit configured to periodically generate a timestamp; an internal clock system operationally connected to the timestamp generating circuit, whereby the timestamp generating circuit is further configured to periodically generate the timestamp based on the internal clock; at least one LED arranged in at least one array of the LED or LEDs, obtaining respectively for each array a LED clock. The timestamp generating circuit is further configured to convert the timestamp into a binary form, and control the LEDs in the at least one array to visually code in accordance with the binary form, whereby each one of the LEDs represents a bit in the binary form. The system further comprises at least one camera, each of the at least one camera having a corresponding field of view, whereby the at least one LED clocks are placed within a respective corresponding field of view of the at least one camera. The system further comprises a processing system configured to record image data from images output from the at least one camera, comprising for each image at least a representation of the LED clock visually coding the binary form physically, encoded with the image for retrieval of information.

## Description

### BACKGROUND OF THE INVENTION

### Field of the invention

The present invention relates to the field of image timestamping and more particularly to high precision timestamping for centimetric georeferencing at high speeds.

### Description of the related art

Photogrammetry is a method enabling the 3D reconstruction of objects via stereoscopy. Observing an object from multiple angles facilitates the generation of diverse 3D data. However, as large areas are scanned, computation times become exponential during one of the preliminary phases-image alignment. This critical step identifies the optical centre of each image. Yet, this process can be expedited, and computation times linearly increased if the positions and orientations of the images are predetermined. Moreover, accurately georeferencing images is the most effective method for georeferencing and scaling either the 3D reconstruction or the extracted data.

There are various systems for directly georeferencing images, each offering differing levels of accuracy. When images are captured at high speeds, the precision of georeferencing diminishes. Some systems incorporate necessary hardware to encode positional data into the images. However, this often introduces complications; recalculating the device's precise trajectory in post-processing, using bidirectional Kalman filters, for example, may yield better accuracy.

The pre-inscribed position within the image metadata then becomes obsolete. Instead, the critical data for image georeferencing becomes the exact time of acquisition. Challenges arise particularly at high speeds, akin to highway speed limits, where temporal precision on the order of milliseconds or less is required for effective georeferencing. GNSS technology (Global Navigation Satellite System) offers precise trajectory calculations down to the centimetre, with excellent temporal precision, thanks to synchronization with the atomic clocks in various GNSS satellite constellations. However, at speeds such as 130 km/h, one centimetre is covered in just 0.28 milliseconds.

In most consumer cameras, determining the acquisition time to the precise second is unfeasible, relying instead on user-set times, which are typically rounded to the nearest second and often quite inaccurate since setting seconds on device clocks is rare. Relying on these acquisition times can lead to georeferencing errors of several hundred meters. Even errors up to 30 meters are easily observed when considering that a speed of 130 km/h equates to over 30 meters per second.

Furthermore, even with a camera connected to the internet, capable of timestamping images through protocols such as the Network Time Protocol (NTP), or ideally, a camera that can integrate a GNSS Time Pulse and a NTP server, interpreting the results remains complex. This complexity stems from the fact that most cameras with electronic shutters process the sensor data either from top to bottom or left to right, a phenomenon known as a "rolling shutter." This processing method complicates determining the precise moment of capture corresponding to the timestamp in the metadata. This issue could be addressed using cameras equipped with "global shutter" sensors, which activate the shutter across the entire sensor simultaneously, however such cameras are comparatively expensive due to their highly specific nature.

A viable solution to circumvent the timestamp issue is to directly encode the capture time into the images. This approach resolves the ambiguities regarding when the pixels were captured, as the time is visibly recorded. However, using a simple display is impractical, as its refresh rate does not allow for millisecond or finer readings, ranging from 30 ms to 4 ms in optimal cases. This solution would also be overly cumbersome on the resulting images. Additionally, most displays refresh either from top to bottom or left to right, rendering the precisely displayed time illegible.

One problem that the invention aims to address is to provide an alternative to the method and system of prior art to directly encode the capture time into the images, which allows a resolution of milliseconds or less.

### BRIEF SUMMARY OF THE INVENTION

In a first aspect, the invention provides a system for generating time encodings. The system comprises a timestamp generating circuit configured to periodically generate a timestamp; an internal clock system operationally connected to the timestamp generating circuit, whereby the timestamp generating circuit is further configured to periodically generate the timestamp based on the internal clock; at least one LED arranged in at least one array of the LED or LEDs, obtaining respectively for each array a LED clock. The timestamp generating circuit is further configured to convert the timestamp into a binary form, and control the LEDs in the at least one array to visually code in accordance with the binary form, whereby each one of the LEDs represents a bit in the binary form. The system further comprises at least one camera, each of the at least one camera having a corresponding field of view, whereby the at least one LED clocks are placed within a respective corresponding field of view of the at least one camera. The system further comprises a processing system configured to record image data from images output from the at least one camera, comprising for each image at least a representation of the LED clock visually coding the binary form physically, encoded with the image for retrieval of information.

In a preferred embodiment, the system further comprises a desired time system configured to output a time signal, configured to receive requests from the timestamp generating circuit over a network through network requests. The timestamp generating circuit is further configured to connect to the network and perform the network requests in form of Network Time Protocol (NTP) requests to obtain the time signal as a reference time and to periodically generate the timestamp based on the internal clock and the reference time, thereby synchronizing the system for generating time encodings with the time signal from the desired time system.

In a further preferred embodiment, the system further comprises at least one Global Navigation Satellite System (GNSS) ground antenna configured to receive continuous signals from GNSS satellites and generate a time pulse synchronized with GNSS clocks. The timestamp generating circuit is further configured to periodically generate the timestamp based on the reference time obtained from the NTP requests and the time pulse from the GNSS ground antennas.

In a further preferred embodiment, the processing circuit is further configured for the retrieval of information from images, by defining a position of each LED of the at least one LED clock in the image, reading the state of each LED, reconstructing the binary form, and calculating the timestamp for each LED clock.

In a further preferred embodiment, the system for generating time encodings further comprises for each of the at least one camera: a rolling shutter delay measuring device configured to determine a rolling shutter value by comparing the timestamps of at least two LED clocks placed at different positions in the image.

In a further preferred embodiment, the timestamp generating device is further configured to encode the timestamp into Pulse Width Modulation (PWM) signals, the at least one LEDs being configured to display the encoded PWM signals, where each LED represents multiple bits in a binary code of the binary form through varying intensity levels. The processing circuit is further configured for the retrieval of information from images, by defining a position of each LED of the at least one LED clock in the image, reading the state of each LED, reconstructing the binary form based on the detected PWM signals from the LEDs, and calculating the timestamp for each LED clock, in order to determine the precise timing of each pixel in an image based on the detected PWM signals from the LEDs.

In a further preferred embodiment, the at least one LED is a RGB LED. The at least one RGB LEDs is configured to display the encoded PWM signals, where each RGB LED represents multiple bits in a binary code of the binary form through varying intensity levels.

In a further preferred embodiment, the time encoded on at least one LED achieves a precision that is equal to or less than 10 ms RMS.

In a further preferred embodiment, the position of at least one LED is specifically configured to capture each exact update, ensuring that the decoded time achieves a precision that is equal to or less than 1 ms RMS.

In a second aspect, the invention provides a method for generating time encodings. The method comprises providing a timestamp generating circuit and an internal clock system operationally connected to the timestamp generating circuit; periodically generating a timestamp with the timestamp generating circuit, based on the internal clock; arranging at least one LED in at least one array of the LED or LEDs, obtaining respectively for each array a LED clock; converting the timestamp into a binary form, and controlling the LEDs in the at least one array to visually code in accordance with the binary form, whereby each one of the LEDs represents a bit in the binary form, with the timestamp generating circuit; providing at least one camera, each of the at least one camera having a corresponding field of view, placing the at least one LED clocks within a respective corresponding field of view of the at least one camera, and recording image data with a processing system, from images output from the at least one camera, comprising for each image at least a representation of the LED clock visually coding the binary form physically, encoded with the image for retrieval of information.

In a further preferred embodiment, the method for generating time encodings further comprises outputting a time signal with a desired time system, the desired time system being configured to receive requests from the timestamp generating circuit over a network through network requests. The timestamp generating circuit is further configured to implement the steps of connecting to the network; and performing the network requests in form of Network Time Protocol (NTP) requests to obtain the time signal as a reference time and to periodically generate the timestamp based on the internal clock and the reference time, thereby synchronizing the system for generating time encodings with the time signal from the desired time system.

In a further preferred embodiment, the method further comprises receiving continuous signals from GNSS satellites with at least one Global Navigation Satellite System (GNSS) ground antenna; and generating a time pulse synchronized with GNSS clocks. The timestamp generating circuit is further configured to periodically generate the timestamp based on the reference time obtained from the NTP requests and the time pulse from the GNSS ground antennas.

In a further preferred embodiment, the method for generating time encodings further comprises retrieving information from images with the processing circuit, by defining a position of each LED of the at least one LED clock in the image, reading the state of each LED, reconstructing the binary form, and calculating the timestamp for each LED clock.

In a further preferred embodiment, the method for generating time encodings further comprises for each of the at least one camera: determine a rolling shutter value with a rolling shutter delay measuring device by comparing the timecodes of at least two LED clocks placed at different positions in the image.

In a further preferred embodiment, the timestamp generating device is further configured to encode the timestamp into Pulse Width Modulation (PWM) signals. The method comprises displaying the encoded PWM signals with the at least one LEDs, where each LED represents multiple bits in a binary code of the binary form through varying intensity levels. The processing circuit is further configured for the retrieval of information from images, by defining a position of each LED of the at least one LED clock in the image, reading the state of each LED, reconstructing the binary form based on the detected PWM signals from the LEDs, and calculating the timestamp for each LED clock, in order to determine the precise timing of each pixel in an image based on the detected PWM signals from the LEDs.

In a further preferred embodiment, the at least one LED is a RGB LED. The method comprises displaying the encoded PWM signals with the at least one RGB LEDs, where each RGB LED represents multiple bits in a binary code of the binary form through varying intensity levels.

In a further preferred embodiment, the time encoded on at least one LED achieves a precision that is equal to or less than 10 ms RMS.

In a further preferred embodiment, updates of the time encoded on at least one LED are precisely measured, allowing the decoded time to achieve a precision that is equal or less than 1 ms RMS.

### BRIEF DESCRIPTION OF THE SEVERAL VIEWS OF THE DRAWINGS

The accompanying drawings, which are incorporated in and constitute part of this specification, illustrate example embodiments of the invention and together with the Figures explain the principles of the invention. The embodiments illustrated herein are presently preferred, it being understood, however, that the invention is not limited to the precise arrangements and instrumentalities shown, wherein:
**Figure 1** is a schematic illustration depicting a process for generating a local timestamp subsequently transmitted to physical clocks. The physical clocks are each constructed using individually addressable LEDs, positioned within a field of view of one or more cameras, according to an example embodiment of the invention;
**Figure 2** is a flowchart detailing a method for generating a sequence that is conveyed to individually addressable LEDs according to an example embodiment of the invention;
**Figure 3** is a schematic illustration depicting a process for generating a precise timestamp, synchronized with NTP (Network Time Protocol), subsequently transmitted to physical clocks. The physical clocks are each constructed using individually addressable LEDs, positioned within a field of view of one or more cameras, according to an example embodiment of the invention;
**Figure 4** is a flowchart detailing a method for synchronizing a computer's clock with a Network Time Protocol (NTP). The synchronized time is then utilized to produce a sequence that is conveyed to individually addressable LEDs according to an example embodiment of the invention;
**Figure 5** is a schematic illustration depicting a process for generating a precise timestamp, synchronized with GNSS atomic clocks, subsequently transmitted to physical clocks. The physical clocks are each constructed using individually addressable LEDs, positioned within a field of view of one or more cameras, according to an example embodiment of the invention;
**Figure 6** is a flowchart detailing a method for synchronizing a computer's clock with a Network Time Protocol (NTP) and GNSS Time Pulses. The synchronized time is then utilized to produce a sequence that is conveyed to individually addressable LEDs according to an example embodiment of the invention;
**Figure 7** is a schematic representation that elucidates a methodology for interpreting individually addressable LEDs in a given image and extracting a precise timestamp;
**Figure 8** is a schematic illustration that explicates how a system for generating highly precise time encodings according to the invention assists in determining a duration required for a camera to read an image across its sensor-a process known as the rolling shutter effect;
**Figure 9** is a schematic illustration that demonstrates what a camera equipped with a rolling shutter perceives when a LED is dimmed, and a method for decoding this information that a LED is dimmed into up to 8 bits, contingent on the LED's specifications, according to an example embodiment of the invention; and
**Figure 10** is a schematic illustration that outlines a procedure for obtaining a timestamp with greater precision than the LED refresh rate, employing a camera fitted with a rolling shutter, according to an example embodiment of the invention.

Same references will be used to reference same or similar features in the Figures throughout the Figures.

### DETAILED DESCRIPTION OF THE INVENTION

The embodiments of the present invention describe a method and a system for generating highly precise time encodings, local or synchronized with the desired time system, such as but not limited to GNSS (GPST - Global Positioning System Time) time or UTC time. As outlined, by utilizing one or multiple individually addressable LEDs, controlled by a computer capable of executing NTP requests and reading the state of GNSS Time Pulses via GPIO (General-Purpose Input/Output) or any suitable connectivity that can read a pulse state, it is feasible to create a physical clock with a refresh rate of approximately 1 kHz or higher. This physical clock, perfectly in sync with NTP and GNSS signals, can then be placed within the field of view of a camera (color or monochrome), allowing for the precise timestamping of images without the concern of internal camera delays, which could be problematic with the relative synchronization methods generally used in photography and videography.

Furthermore, the invention also enables an estimation of the reading time of a rolling shutter sensor with very high accuracy, i.e., +/- 1 ms - a piece of information rarely shared by manufacturers or one that may lack the necessary precision for certain applications. Depending on the configuration, reading the time at resolutions higher than the update resolution of the LED or LEDs is possible. Combining different methods or configurations thus allows for the construction of a tailored setup to address the problem at hand, whether it be for absolute temporal referencing of images, for precise post-processing positioning from mobile systems, or for the very accurate synchronization of various photosensitive sensors, precise delay measurements, and so on.

To achieve a resolution on the order of milliseconds or less, it is essential to have a clock system capable of refreshing at a minimum rate of 1000 Hz. To match the precision of GNSS trajectories on highways, i.e., when moving at typical speeds of travelling on a highway while measuring, such as for example 130 km/h, even a rate of 3000 Hz may be necessary.

In an example embodiment of the system according to the invention, time is encoded in binary on a plurality of individually addressable single colour LEDs arranged in an array, with 1 bit of data per LED.

In a further example embodiment of the system according to the invention time is encoded in binary on a plurality of individually addressable RGB LEDs arranged in an array, with 3 bits of data "stacked" per RGB LED, i.e., one bit for each of the red, green and blue channels.

Both example embodiments offer significant advantages due to their high reactivity and low cost. As the RGB LEDs offer a greater versatility, the following description will concentrate on the RGB LEDs system. However monochromatic LEDs may be considered interchangeable with RGB LEDs throughout all described embodiments.

By adopting an array of sequentially aligned RGB LEDs, each one being denominated as channel, and encoding a resolution of 0.5 ms on the red channel of the first RGB LED, 1 ms on the green channel of the first RGB LED, 2 ms on the blue channel of the first RGB LED, 4 ms on the red channel of the second RGB LED, and so on, it becomes possible to infallibly encode the time of image acquisition. Furthermore, since camera photosites are covered with red, green, and blue filters for color reconstruction (Bayer matrix), distinguishing whether a red, green, or blue channel of a LED is activated becomes straightforward with minimal interference. The time it takes for a LED to light up or extinguish is well below a millisecond, which poses no issue. In case monochromatic LEDs are used instead of RGB LEDs, the red channel of the RGB LED would be embodied by a first monochromatic LED, the green channel of the RGB LED would be embodied by a second monochromatic LED, the blue channel of the RGB LED would be embodied by a third monochromatic LED and so on...

Regarding the generation of the time signal, a computer or a microprocessor can generate it alone, making it a local time reference not synched to official time systems but very useful to synchronize multiple cameras together. Connecting the device to an NTP server allows synchronization to official time systems, like UTC with a precision down to 10 milliseconds (extremely variable depending on the device used) and reading the state of a GNSS antenna's Time Pulse gives an extremely precise reference to ensure the synchronization to official time systems is below 1 millisecond.

The only variable delay is the time it takes to update the RGB LEDs, depending on the number of RGB LEDs to be updated. Depending on the required precision, this may not pose a problem or, in critical cases where high precision is necessary, an encoding can be implemented to change no more than one LED at a time. This type of encoding is facilitated with RGB LEDs by the fact that each RGB LED represents 3 bits of data (one bit per colour channel). With monochromatic LEDs an encoding using the Gray code (also known as reflected binary code - RBC) would avoid updating more than one LED at the time.

It is possible to encode more than one bit per pixel colour by changing the intensity level of the RGB LEDs, which are typically adjustable within a range of 0 to 255. This does not speed up the update time of each RGB LED, which is already the limiting factor. However, with a camera using a "rolling shutter" mechanism, reading each color level up to 8 bits (0 to 255) can be accurately done because each color's illumination level is controlled via PWM (Pulse Width Modulation). On the red channel, for instance, one can visibly see the RGB LED dim or brighten depending on the illumination setting. Practically, this adjustment is made by rapidly switching the RGB LED on and off. The time between two consecutive lightings of the RGB LED is fixed; however, the duration the RGB LED remains lit increases with the level of illumination. Thus, at 0, the RGB LED is off all the time, at 100, the RGB LED is lit 101/256th of the time, and at 255, the RGB LED is lit all the time.

With a camera that reads from top to bottom or left to right, it will be evident in the resulting image that the red, green, and blue channels of the RGB LED are alternately lit and extinguished. This allows up to 24 bits of data to be encoded per RGB LED. Thus, one RGB LED can encode up to slightly more than 16,700 seconds with millisecond order resolution, lifting an ambiguity of over 4 hours. This is already more than sufficient to define the acquisition time of a camera with an imprecise internal clock. With just two RGB LEDs, representing 48 bits, it is possible to encode milliseconds in complete Julian date, extending to approximately the year 4200. To perform this reading, one must know the frequency of the RGB LEDs and the reading time of the camera ("rolling shutter") as well as adjust the exposure time of the camera so that the reading can be done precisely. Defining the reading time of an image is not an easy task, and this information is rarely provided by the manufacturer, but the methods presented here also help to resolve this ambiguity.

Since these RGB LEDs can be connected in parallel to be perfectly synchronized, simply placing a series of RGB LEDs at the top and another at the bottom of the image suffices. From there, reading the time delta between what is displayed on the top RGB LEDs and those on the bottom is straightforward.

In practice, encoding 24 bits per RGB LED is challenging and rarely applicable because it would require situations where the exposure time is very short. However, in the context of high-speed imaging, this is very useful because it is applicable on any camera. It is even possible to see the exact moments of RGB LED updates, thus going below the encoding resolution. For example, if the signal generated on the RGB LEDs updates every millisecond, we will know that the signal change corresponds to the start of a millisecond once update delays are measured and compensated. This method is similar to that used with GNSS Time Pulses, where only a resolution of one second is encoded, but where the rising edge of the pulse defines the beginning of the second with extreme precision, allowing synchronization down to the nanosecond.

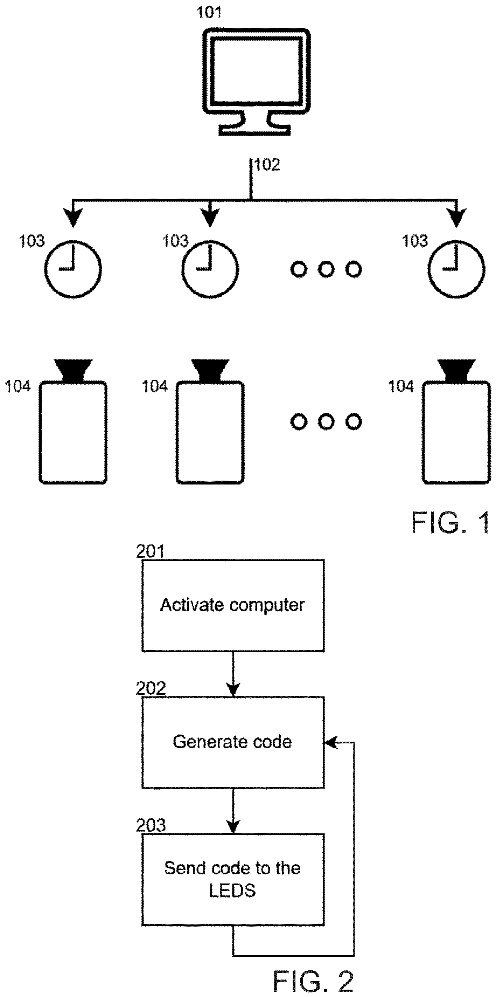

For illustration, **Figure 1** describes how an example of a system for generating highly precise time encodings, in a local time system may be constructed according to the invention. This example system is particularly well-suited to define relative delays between different cameras or to define the rolling shutter delay of a given camera. A computer **101,** usually comprising its own internal clock or quartz to refer to, periodically generates a timestamp **102** and sends it to one or more LEDs **103** which are placed within the field of view of one or more cameras **104.**

**Figure 2** illustrates how this simple loop is performed, as described above for **Figure 1****.** The computer is activated **201,** then it generates a timestamp based on its internal clock, translates it as a code in box **202** which is sent to the LEDs **203.** The loop starts over again, a new timestamp is defined, translated as a code **202** and sent to the LEDs **203** until the computer is shut down.

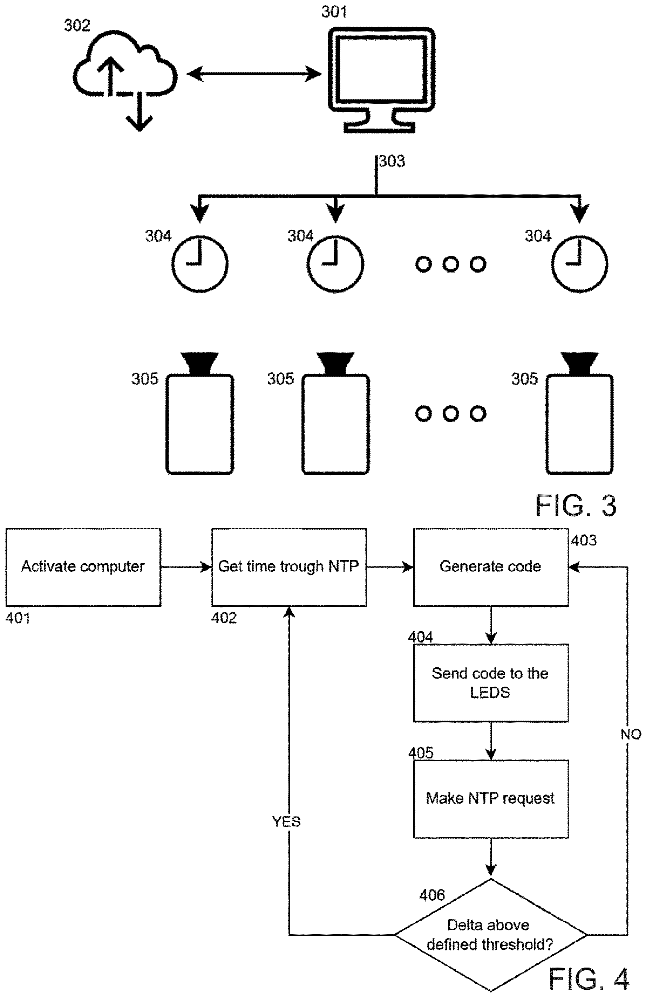

**Figure 3** describes how to extend the system depicted on **Figure** 1 to synchronize the timestamp to official time systems like UTC, GPST, or any other user defined time system, may it be local or global. A computer **301** is connected to a network **302** and performs NTP (Network Time Protocol) requests to get a reference time. This reference time allows the computer to generate a timestamp **303** and send it to one or more LEDs **304** which are placed within the field of view of one or more cameras **305.** This example system is particularly well-suited for low-speed photogrammetric work (< 5 m/s), where image timestamps are crucial to rebuild their trajectories correctly. However, experience has shown that most computers perform NTP requests even if the user does not explicitly ask for it. This leads to variations between official time systems and the computer's internal clock as the computer tries to slowly converge to the official time system. These variations can lead to errors ranging from 10 to 50 ms and affect the timestamp **303** generated by the computer **301** in this case. These errors are not too problematic to reconstruct a good trajectory under 5 m/s, but at higher speeds, this setup becomes inappropriate.

**Figure 4** illustrates how to perform synchronization to official time systems to build a timestamp and send it to LEDs. The computer is activated **401,** gets time trough one or more NTP requests **402,** generates a timestamp synchronized with the given time system and translates it as a code **403** sent to one or more LEDs **404,** then the computer makes a new NTP request **405** (ideally in an asymmetric process, to guarantee that the LEDs refresh rate is high enough, around 1 kHz). It then compares if the difference between time obtained through the NTP request and the actual timestamp is below a certain threshold **406** which defines if the timestamp is still synchronized to the desired time system or not. If the difference is low enough, the loop can continue according to the branch labelled "NO"; generate code **403,** send it to the LEDs **404,** make NTP request **405,** control the difference **406,** and so on... If the difference is too high then branch labelled "YES" is followed, and the clock will be readjusted to match the desired time system as in step **402,** then the loop can continue until the computer is shut down.

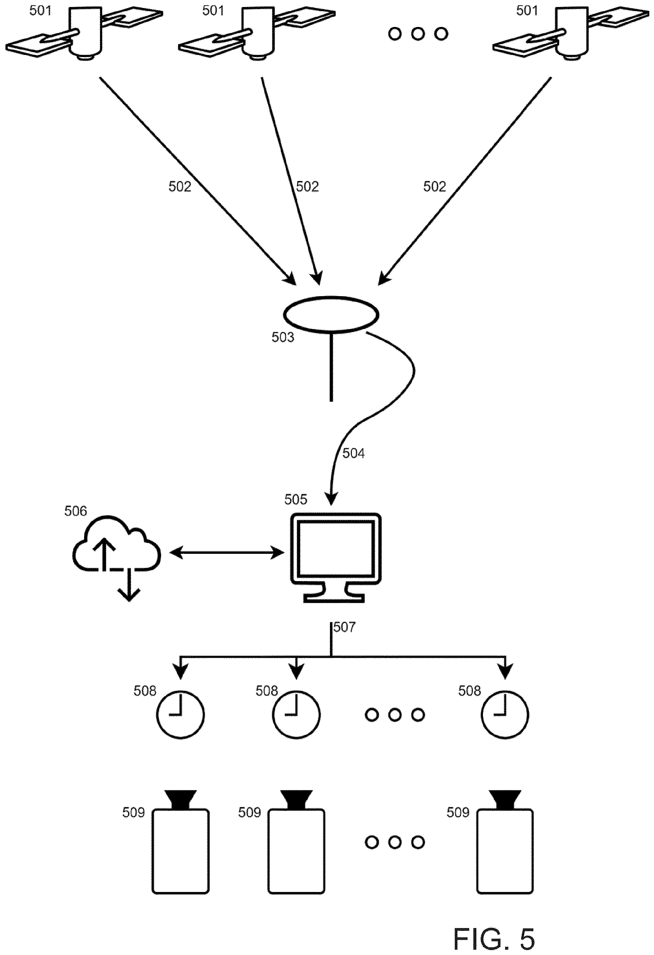

**Figure 5** describes how an example of a system for generating highly precise time encodings, synchronized with the desired time system may be constructed according to the invention. This example system is particularly well-suited for high-speed photogrammetric work (> 5 m/s), where it is necessary to continuously track the position of camera capture centres with centimetric resolution. Thus, GNSS satellites **501** emit continuous signals **502.** For efficient positioning, due to their high speeds, all the GNSS satellites **501** are equipped with atomic clocks (not illustrated) synchronized by constellation management teams (not illustrated). The continuous signals **502** transmitted, in a simplified form, comprise repeated messages indicating an exact time (not illustrated) the continuous signal **502** was sent and a name (not illustrated) of the GNSS satellite **501** emitting it.

The continuous signals **502** are then interpreted by one or more ground antennas **503.** This allows, on the one hand, to recalculate a position of the ground antenna **503,** but given the nature of the continuous signals **502,** it is also possible to know the exact time when the continuous signals **502** are received. Most embodiments of ground antennas **503** (only one example shown in **Figure 5**) can output very precise data about the current time. In theory, a single ground antenna **503** is sufficient because GNSS antennas (not illustrated) can emit various signals (RTCM messages, Radio Technical Commission for Maritime Services) that contain the date and time. However, experience has shown that these signals provide a very precise time with a sub-millisecond precision, but one that is linked to the position listed in the signal or subsequent ones. The delay for the ground antenna **503** to generate the output data is, however, very variable and sometimes exceeds one second, which is far too imprecise for applications requiring precise timestamping.

Nonetheless, the GNSS antenna, i.e., the ground antenna **503** is generally capable of generating another signal, i.e., a Time Pulse (TP) (not illustrated), typically configured to emit an electrical current of 3.3 V for 100 milliseconds every 1000 milliseconds. The onset of this Time Pulse (rising edge) is synchronized with GNSS clocks (not illustrated) of the GNSS satellites **501** with nanosecond order accuracy. This for now only indicates the start of seconds, but it is not yet possible to know exactly which second the Time Pulse signifies the beginning of the RTCM messages (not illustrated). At this stage, only the Time Pulse exits the ground antenna **503** via a cable **504,** connected to a computer **505.**

On the computer **505,** a state of the Time Pulse received via the cable **504** may be easily retrieved via GPIO (General-Purpose Input/Output.) pins, for example. It only remains to obtain a reference time with second-order (i.e., "second" as the base unit of time in the International System of Units (SI)) precision to simply round this reference time to a nearest second whenever a rising edge is detected on the Time Pulse. Acquiring this reference time is simply done by connecting the computer **505** to the internet to perform NTP requests **506.** Experience shows that it is easy to obtain a reference time with an accuracy of +/- 300 ms on a bad internet connection and more generally +/- 20 ms.

All that is left is to generate a code **507** to display the time on clocks **508,** which will be placed within a respective field of view of each of cameras **509** to physically encode a very precise time into the images. One of the main advantages of using these kinds of individually addressable RGB LEDs, is that they can be wired in parallel, allowing the use of several RGB LEDs by generating only one signal, i.e., one encoded timestamp generated by the computer **505.** These signals are then perfectly synchronized, at a higher precision than the signal itself is generated.

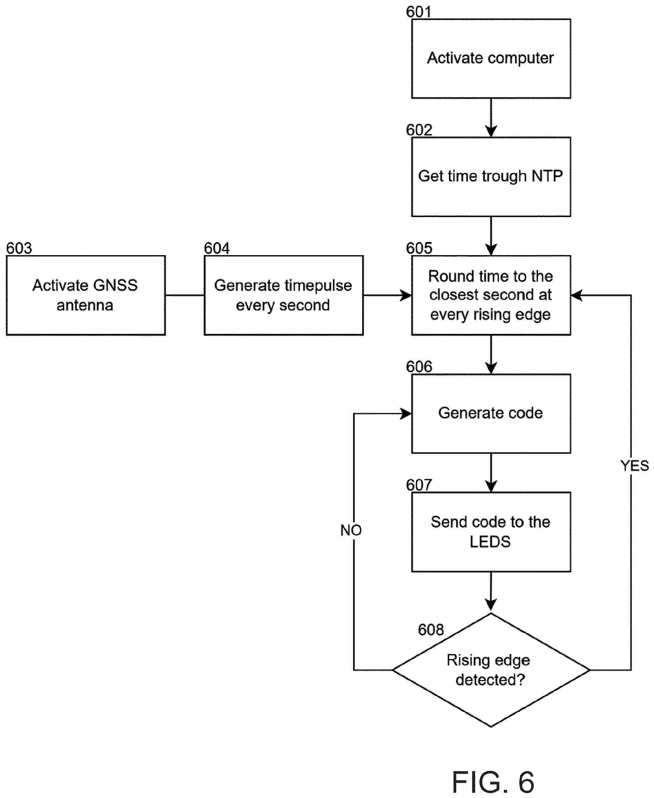

**Figure 6** illustrates how synchronization is performed, as described above. After the computer is powered on **601,** a NTP reference time is obtained via NTP protocols **602.** On the other hand, one or several GNSS antennas **603** is/are initialized which are configured to generate a Time Pulse every second **604.** With the NTP reference time, we simply round the NTP reference time to the nearest second when a rising edge is detected **605.**

Once the reference time is established from detection **605,** it is necessary to update individually addressable RGB LED(s) displaying the time. To do this, a loop is generated where the code is generated **606,** the code is then sent to the individually addressable RGB LEDs **607,** and then a state of the Time Pulse is checked **608.** If the Time Pulse is not detected, the code is generated **606** once more for the RGB LEDs by refreshing the time using a computer's internal clock (not illustrated) to determine an amount of time elapsed since the last update. If the state of the Time Pulse is active and it was not in the previous reading, which indicates a rising edge, then the time is calculated using the computer's internal clock to determine how much time has elapsed since the last update and then this time is rounded to the nearest second **605.** In principle, this step should not significantly alter the reference time, but it ensures synchronization over long periods while verifying that there is no abnormal time discrepancy. This avoids the system to be influenced by external factors like temperature, computer power variations, etc... leading to internal clock drift.

Regarding the encoding of time on the RGB LEDs, an example method is to convert the current reference time into seconds and then milliseconds by multiplying by 1000, and to convert these decimal milliseconds into binary. We could then simply convert this encoding into RGB LED colours. For example, 150 ms translates to 10010110 in binary. This would then require 3 RGB LEDs where the first would light up green (R=0, G=255, B=0), the second also in green (R=0, G=255, B=0), and the third in yellow (R=255, G=255, B=0), reconstructing the code 010010110, corresponding accurately to 150 in decimal. However, it has been observed that the RGB LED update delay depends on the number of RGB LEDs to be updated. By counting in a "normal" way, there are thus cases where several RGB LEDs must be updated, which creates uncertainties in reading. This is not necessarily a blocking issue, and the system already functions well without this additional optimization, but a solution to this problem is to convert the binary code into Gray code before converting it into colours on the RGB LEDs. This type of encoding thus ensures that no more than one bit is changed at a time, yielding much more reliable and consistent update delays.

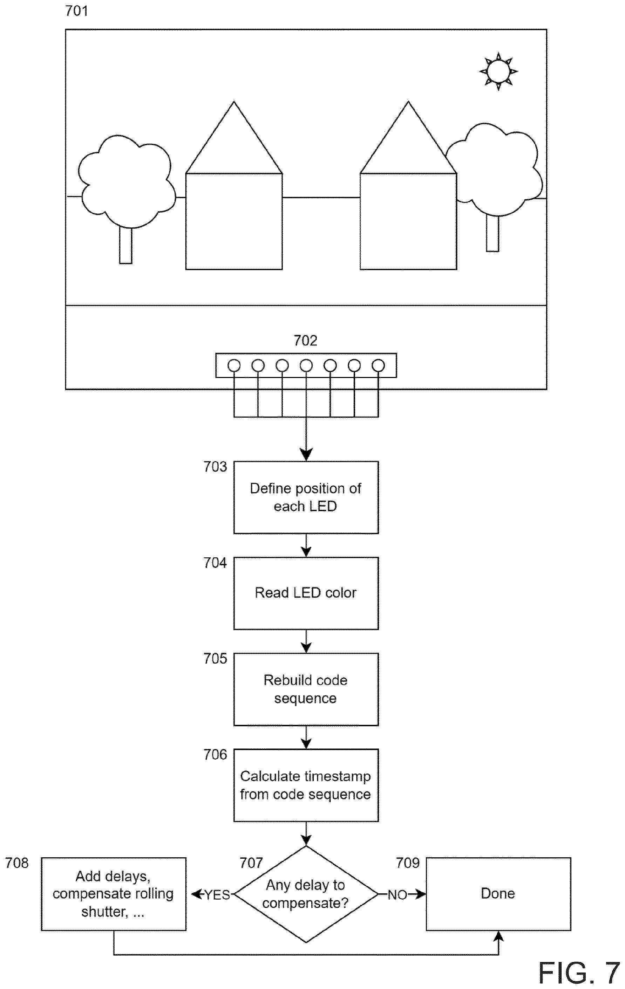

**Figure 7** illustrates an example according to the invention as how a RGB LED clock **702** is subsequently read within an image **701.** It is sufficient for the RGB LED clock **702** to be visible, regardless of whether it is in focus or blurred within the image **701.** This is another advantage of using the system according to the invention because any system that displays time in a digital format would need to be clear to be read, whereas RGB LEDs of the RGB LED clock **702** can be read even if completely out of focus. This allows the image quality on the main subject to be maintained.

Upon opening the image **701** in a program, a first step **703** is to define a position of the RGB LEDs of the RGB LED clock **702** to read the temporal encoding in the image **701** or a series of images (not illustrated). Once the position is defined, the colour of each of the RGB LEDs is extracted **704** by simply looking at the levels of red, green, and blue in the image **701,** for example: RGB LED 1 R= 15, G= 245, B= 52; RGB LED 2 R= 25, G= 237, B= 34; RGB LED 3 R= 212, G= 228, B= 37 (RGB LED 1, RGB LED 2 and RGB LED 3 not illustrated). By applying a threshold, it is possible to determine which channel was lit and rebuild the code sequence **705,** in this example case with a threshold of 128: RGB LED 1: 010, RGB LED 2: 010, RGB LED 3: 110, resulting in 010010110. With this code (in Gray code or not), we can then decode **706** the decimal time (decimal timestamp), here 150 ms without Gray code. The system then considers if there are any delays that need to be corrected **707;** if yes, the delays are applied **708;** if not, the time is established **709.**

Delays as applied in step **708** can be of various types, for example, if the RGB LEDs were placed at a bottom of the image **701** of a camera with a rolling shutter, this delay would need to be compensated. There could also be electronic delays, like the time to update the RGB LED or other internal delays. Finally, another delay to add could be the day or time of acquisition coming from other data, such as the image metadata, for example. A system according to a preferred embodiment of this invention, for instance, uses 8 RGB LEDs to encode the milliseconds of the current hour. This does not overly clutter the image with RGB LEDs and takes the current time from the EXIF metadata of the image, then calculates the minutes, seconds, and milliseconds in UTC with the RGB LED system.

Among the delays mentioned is the rolling shutter. This effect occurs because many photographic sensors read images sequentially, usually one line after another, but sometimes one column after another. As a result, regardless of the exposure time, the pixels at the top of the image are not read simultaneously with those at the bottom. This is crucial because it induces a distortion dependent on the camera's movement, not its optics. This parameter is very important, for example, in photogrammetry, because at 120 km/h, a rolling shutter of 10 ms implies that the pixels at the top of the image were captured 30 centimetres apart from those at the bottom. Yet this value is already among the lower rolling shutter values; it can go up to 100 milliseconds on many cameras.

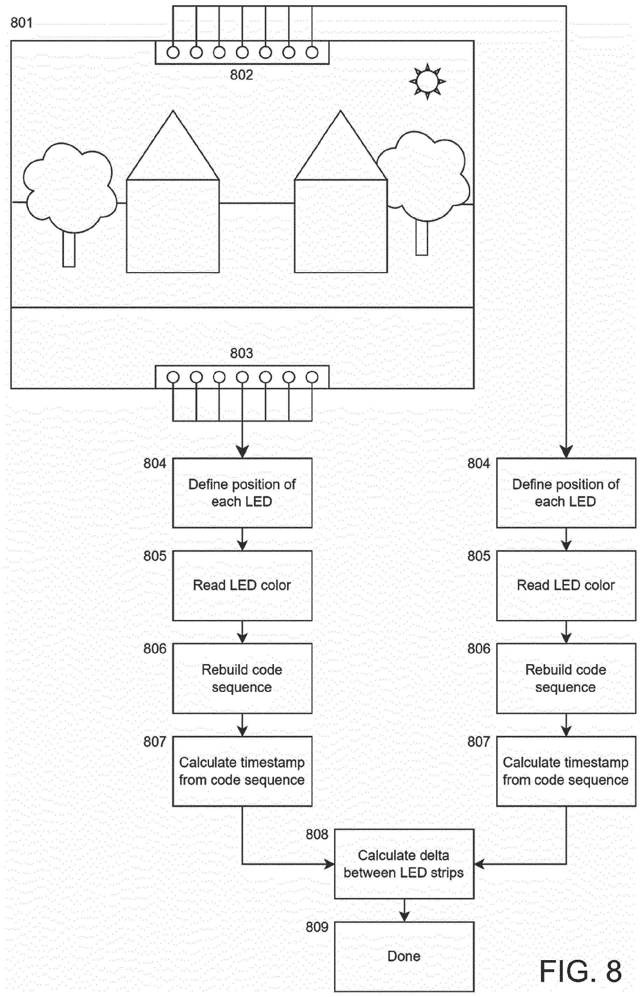

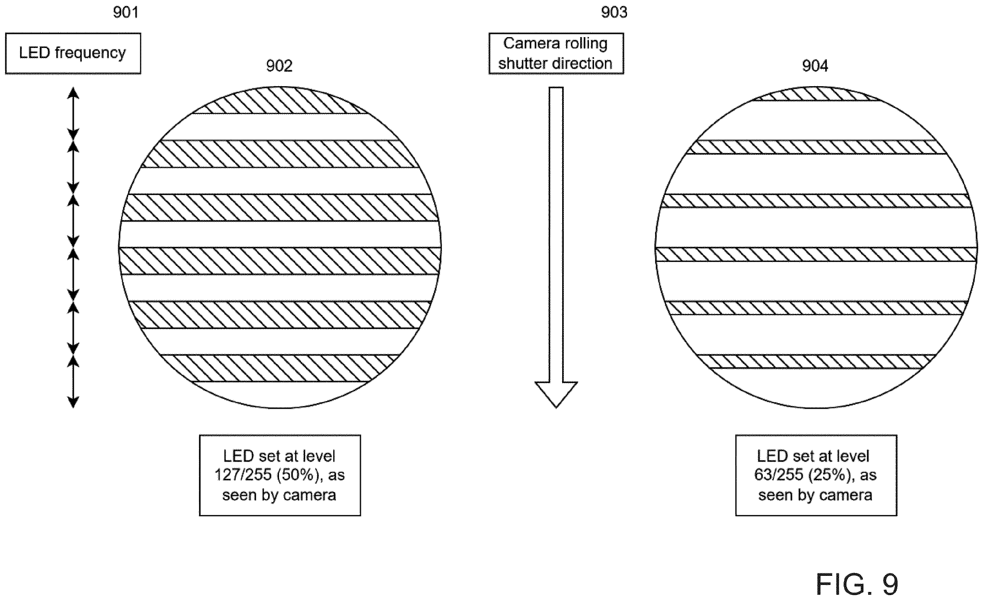

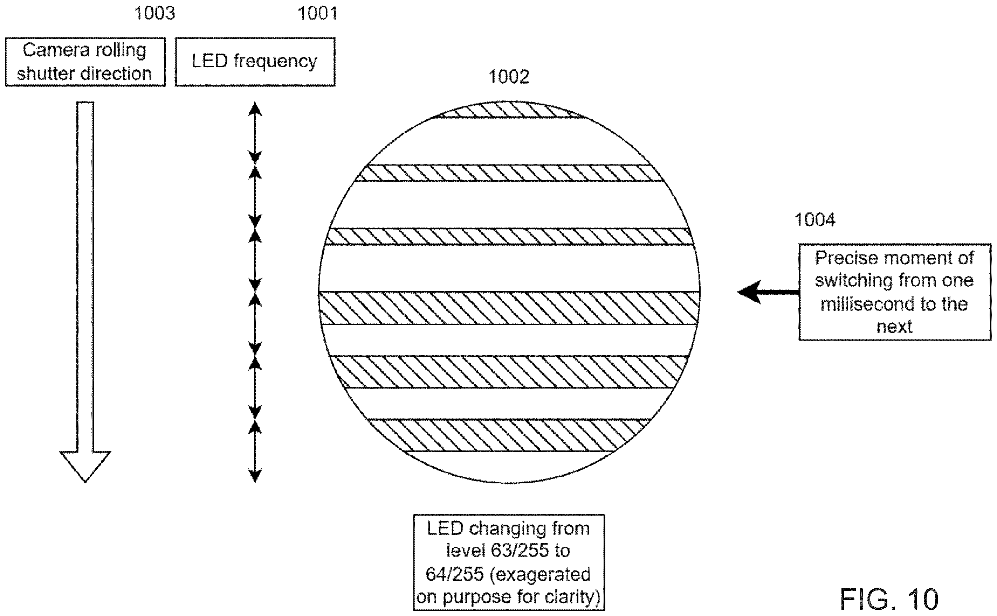

This is important with the current invention because it is essential to compensate for this delay depending on where the clock is placed. **Figure 8** shows how, according to a preferred embodiment of the invention, it is also possible to define the values and the direction of the rolling shutter in the images. This may be important, because the direction is also almost never specified by the manufacturer of the rolling shutter. One might think that from bottom to top on the longer side is the norm, but in an optical system, what is perceived as the top of the image is the bottom of the sensor. It is therefore difficult to assert that the manufacturer deliberately wired the sensor from bottom to top to compensate for this when it affects very few users. Thus, in an image **801,** we can place first and second RGB LED clocks **802, 803** on either opposite side. Then, as in **Figure 7****,** we may define the position of the RGB LEDs **804,** read their colour **805,** reconstruct the code sequence **806,** and calculate the timestamp for each clock **807.** It then remains only to subtract the timecode of the first RGB LED clock **803** from the timecode of the second RGB LED clock **802** to obtain the camera's rolling shutter value. It is not even necessarily required that the RGB LED clocks be on opposite sides of the image, although this is more accurate; they can be placed anywhere and extrapolate the timestamp difference to obtain the value for the entire image. This could, for example, verify that the reading is smooth. Although it is rare for the rolling shutter effect not to be smooth, the specifics of sensor construction can induce unexpected delays or distortions. For example, some manufacturers produce base sensors, which they multiply and join together to form larger ones. Then, one could create a grid of individually addressable RGB LEDs covering the image and wired in parallel, displaying a sequence in a loop at very high frequency, to verify the order of reading the pixels (photosites) and the homogeneity of their reading. A single RGB LED might even suffice with the methods explained in reference to **Figure 9** and **Figure 10****.**

These are very short delays, less than what a 1000 Hz refresh rate can display, but the details in **Figure 9** and **Figure 10** explain how it is possible to obtain an even more precise reading of time without changing the system and minimizing the number of RGB LEDs because a grid wired in parallel capable of displaying only 3 bits of data (red, green, and blue) would cause problems for correctly reading and interpreting the displayed data.

**Figure 9** then shows how to encode up to 24 bits of data on a single RGB LED **902.** This requires understanding exactly how these RGB LEDs work. The signal sent to them tells them at what level to light up each of the red, green, and blue channels. This is done on a scale of 0 to 255, i.e., 8 bits, so we can encode 24 bits of data. However, the difference between red level 234 and red 235 is almost imperceptible to the naked eye. However, this is not the case for a camera with a rolling shutter. This is because LEDs adjust their intensity level by turning on and off successively. The longer the RGB LED **902** is on, the more it lights up, but the time between two lightings of the RGB LED **902** is fixed. This system is called PWM for Pulse Width Modulation. These pulses occur at a certain frequency **901.** If this frequency is, for example, 1000 Hz, and the RGB LED **902** covers the entire field of view of the camera, and the camera sensor's reading time is 6 milliseconds, we will then see the RGB LED **902** light up and turn off 6 times in a direction of the sensor reading **903.** If the level is set to 127/255, as on RGB LED **902,** we will then see it lit half the time, and if the level is only 63/255, as on RGB LED **904,** then we will only see it lit a quarter of the time.

This allows more than one bit per color channel of each RGB LED to be encoded. However, it is crucial to use a camera with a rolling shutter sensor because a global shutter, which reads the entire image at the same time as opposed to the rolling shutter, will only see a RGB LED completely lit or completely off; only the probability of seeing it lit will change depending on the lighting level. It is also worth noting that to enable this reading, the camera's exposure time must be adjusted to correspond to the LED frequency divided by the number of bits to be encoded per color channel for a clear reading. For example, to read 2 bits per channel on a RGB LED with a refresh rate of 10 kHz (= 1/10,000 s), the exposure time must be a maximum of 1/20,000th of a second.

A global shutter camera would allow reading the level of a RGB LED encoding more than one bit per color channel, but then a much longer exposure time than the LED's frequency would be required. In practice, it is already complicated to read whether a channel is completely on or off, so extracting the lighting level becomes really complex, but not impossible.

Now, with **Figure 10****,** a method to encode time in an image with up to 24 bits per pixel and a temporal resolution better than the LED refresh rate will be described. In the image of the GNSS Time Pulse, whose refresh rate is only 1 Hz, but whose precision in positioning the beginning of the pulse is extreme, on the order of the nanosecond, it is possible to set up a system to see precisely the moment when a RGB LED updates, allowing more precise measurements to be made when it comes to, for example, making differential measurements between RGB LEDs connected in parallel.

It then becomes possible to synchronize high-speed cameras, for example. To do this, we will place a RGB LED **1002** so that, on a rolling shutter camera, we always see its update. For example, if it updates every millisecond and the camera needs 6 ms to read an image from top to bottom, then the RGB LED must be visible on at least 1/6th of the image. Thus, a precise moment **1004** when the RGB LED updates can be defined and by extrapolating the rolling shutter effect over the rest of the image, it will be possible to know exactly when each pixel was captured, and this, in a relative manner in time, with respect to an event, or synchronized with the atomic clocks of GNSS satellites.

The use of, for example, a trigger time map across the sensor, generated with this invention, allows the precise timestamping of each individual pixel. This map can also be generated with a single RGB LED as explained, if it covers the entire sensor, the RGB LED's lightning leading edges will be defined, measured, and compared. The fronts of change in value define the start of each update, in this case of each millisecond, but all intermediate illuminations will act as a simple graduation to be read across the image. The difference between the values before and after the update **1004** of the RGB LED **1002** may seem minimal and difficult to detect, but this is only a matter of input encoding; it is enough to make sufficiently large thresholds between successive values to distinguish them well. This would be equivalent in decimal to counting in the following way: 0, 10, 20, 30, 40, 50, 60, 70, 80, 90, 1, 11, 21, etc... This would also be easily decodable.

This seemingly simple encoding method can then be applied in very diverse situations, such as photogrammetry, but also telemetry, quality control, and other applications requiring high-precision temporal measurements that were previously unattainable on consumer-grade equipment, at very low setup and operating costs.

## Claims

1. A system for generating time encodings, the system comprising:
a timestamp generating circuit configured to periodically generate a timestamp;
an internal clock system operationally connected to the timestamp generating circuit, whereby the timestamp generating circuit is further configured to periodically generate the timestamp based on the internal clock;
at least one LED arranged in at least one array of the LED or LEDs, obtaining respectively for each array a LED clock;
the timestamp generating circuit being further configured to convert the timestamp into a binary form, and control the LEDs in the at least one array to visually code in accordance with the binary form, whereby each one of the LEDs represents a bit in the binary form,
at least one camera, each of the at least one camera having a corresponding field of view,
whereby the at least one LED clocks are placed within a respective corresponding field of view of the at least one camera,
a processing system configured to record image data from images output from the at least one camera, comprising for each image at least a representation of the LED clock visually coding the binary form physically, encoded with the image for retrieval of information.

2. The system for generating time encodings according to claim 1, further comprising
a desired time system configured to output a time signal, configured to receive requests from the timestamp generating circuit over a network through network requests;
the timestamp generating circuit being further configured to connect to the network and perform the network requests in form of Network Time Protocol (NTP) requests to obtain the time signal as a reference time and to periodically generate the timestamp based on the internal clock and the reference time, thereby synchronizing the system for generating time encodings with the time signal from the desired time system.

3. The system for generating time encodings according to claim 2, the system further comprising
at least one Global Navigation Satellite System (GNSS) ground antenna configured to receive continuous signals from GNSS satellites and generate a time pulse synchronized with GNSS clocks;
the timestamp generating circuit being further configured to periodically generate the timestamp based on the reference time obtained from the NTP requests and the time pulse from the GNSS ground antennas.

4. The system for generating time encodings of any one of claims 1 to 3,
wherein
the processing circuit is further configured for the retrieval of information from images, by defining a position of each LED of the at least one LED clock in the image, reading the state of each LED, reconstructing the binary form, and calculating the timestamp for each LED clock.

5. The system for generating time encodings according to claim 4, further comprising
for each of the at least one camera:
a rolling shutter delay measuring device configured to determine a rolling shutter value by comparing the timestamps of at least two LED clocks placed at different positions in the image.

6. The system for generating time encodings of any one of claims 1 to 5,
wherein,
the timestamp generating device is further configured to encode the timestamp into Pulse Width Modulation (PWM) signals;
the at least one LEDs being configured to display the encoded PWM signals, where each LED represents multiple bits in a binary code of the binary form through varying intensity levels;
and wherein
the processing circuit is further configured for the retrieval of information from images, by defining a position of each LED of the at least one LED clock in the image, reading the state of each LED, reconstructing the binary form based on the detected PWM signals from the LEDs, and calculating the timestamp for each LED clock, in order to determine the precise timing of each pixel in an image based on the detected PWM signals from the LEDs.

7. The system for generating time encodings according to claim 6,
wherein,
the at least one LED is a RGB LED,
the at least one RGB LEDs being configured to display the encoded PWM signals, where each RGB LED represents multiple bits in a binary code of the binary form through varying intensity levels.

8. The system for generating time encodings of any one of claims 1 to 7, wherein the time encoded on at least one LED achieves a precision that is equal to or less than 10 ms RMS.

9. The system for generating time encodings according to any one of claims 1 to 7, wherein the position of at least one LED is specifically configured to capture each exact update, ensuring that the decoded time achieves a precision that is equal to or less than 1 ms RMS.

10. A method for generating time encodings, the method comprising:
providing a timestamp generating circuit and an internal clock system operationally connected to the timestamp generating circuit;
periodically generating a timestamp with the timestamp generating circuit, based on the internal clock;
arranging at least one LED in at least one array of the LED or LEDs, obtaining respectively for each array a LED clock;
converting the timestamp into a binary form, and controlling the LEDs in the at least one array to visually code in accordance with the binary form, whereby each one of the LEDs represents a bit in the binary form, with the timestamp generating circuit;
providing at least one camera, each of the at least one camera having a corresponding field of view,
placing the at least one LED clocks within a respective corresponding field of view of the at least one camera,
recording image data with a processing system, from images output from the at least one camera, comprising for each image at least a representation of the LED clock visually coding the binary form physically, encoded with the image for retrieval of information.

11. The method for generating time encodings according to claim 10, further comprising
outputting a time signal with a desired time system, the desired time system being configured to receive requests from the timestamp generating circuit over a network through network requests;
the timestamp generating circuit being further configured to implement the steps of
connecting to the network;
performing the network requests in form of Network Time Protocol (NTP) requests to obtain the time signal as a reference time and to periodically generate the timestamp based on the internal clock and the reference time, thereby synchronizing the system for generating time encodings with the time signal from the desired time system.

12. The method for generating time encodings according to claim 11, the method further comprising
receiving continuous signals from GNSS satellites with at least one Global Navigation Satellite System (GNSS) ground antenna; and
generating a time pulse synchronized with GNSS clocks;
the timestamp generating circuit being further configured to periodically generate the timestamp based on the reference time obtained from the NTP requests and the time pulse from the GNSS ground antennas.

13. The method for generating time encodings of any one of claims 10 to 12, further comprising
retrieving information from images with the processing circuit, by defining a position of each LED of the at least one LED clock in the image, reading the state of each LED, reconstructing the binary form, and calculating the timestamp for each LED clock.

14. The method for generating time encodings of claim 13,
the method further comprising for each of the at least one camera:
determine a rolling shutter value with a rolling shutter delay measuring device by comparing the timecodes of at least two LED clocks placed at different positions in the image.

15. The method for generating time encodings of any one of claims 10 to 14,
wherein,
the timestamp generating device is further configured to encode the timestamp into Pulse Width Modulation (PWM) signals;
the method comprising
displaying the encoded PWM signals with the at least one LEDs, where each LED represents multiple bits in a binary code of the binary form through varying intensity levels;
and wherein
the processing circuit is further configured for the retrieval of information from images, by defining a position of each LED of the at least one LED clock in the image, reading the state of each LED, reconstructing the binary form based on the detected PWM signals from the LEDs, and calculating the timestamp for each LED clock, in order to determine the precise timing of each pixel in an image based on the detected PWM signals from the LEDs.

16. The method for generating time encodings of claim 15,
wherein,
the at least one LED is a RGB LED,
the method comprising
displaying the encoded PWM signals with the at least one RGB LEDs, where each RGB LED represents multiple bits in a binary code of the binary form through varying intensity levels.

17. The method for generating time encodings of any one of claims 10 to 16, wherein the time encoded on at least one LED achieves a precision that is equal to or less than 10 ms RMS.

18. The method for decoding time encodings of any one of claims 10 to 16, wherein updates of the time encoded on at least one LED are precisely measured, allowing the decoded time to achieve a precision that is equal or less than 1 ms RMS.
